# EUROPÄISCHE PATENTSCHRIFT

(11) **EP 4 045 590 B1**
(45) Veröffentlichungstag und Bekanntmachung des Hinweises auf die Patenterteilung: **29.05.2024**
(21) Anmeldenummer: 20792365.7
(22) Anmeldetag: 13.10.2020
(51) Int. Cl.: C08L 23/12, C08L 23/14

(54) **AMORPHES POLY-ALPHA-OLEFIN ENTHALTENDES POLYOLEFINGEMENGE**
AMORPHOUS POLY-ALPHA-OLEFIN-CONTAINING POLYOLEFIN
MÉLANGES DE POLYOLÉFINES CONTENANT DES POLY-ALPHA-OLÉFINES AMORPHES

(30) Priorität: 16.10.2019 EP 19203594
(43) Veröffentlichungstag der Anmeldung: 24.08.2022
(73) Patentinhaber: Evonik Operations GmbH, 45128 Essen (DE)
(72) Erfinder: BABIK, Sebastian, 40468 Düsseldorf (DE); CEPA, Steffen, 45768 Marl (DE); HESSNER, Sebastian, 45127 Essen (DE); KIRSCHBAUM, Stefan, 40789 Monheim am Rhein (DE)
(74) Vertreter: Evonik Patent Association
(86) Internationale Anmeldenummer: PCT/EP2020/078736
(87) Internationale Veröffentlichungsnummer: WO 2021/074125

(56) Entgegenhaltungen:
- EP-A1- 1 418 205
- US-A1- 2016 102 230

## Beschreibung

Die vorliegende Erfindung betrifft ein Gemenge enthaltend mindestens zwei verschiedene Polyolefine, welches dadurch gekennzeichnet ist, dass es als weiteren Bestandteil ein amorphes Polyalpha-Olefin enthält, welches auf den Monomeren Ethen, Propen und 1-Buten basiert und dessen Viskosität bei 190°C gemessen nach der in der Beschreibung angegeben Methode, von 200 mPa*s bis 200.000 mPa*s beträgt, wobei es als mindestens zwei verschiedene Polyolefine Polyethylen und Polypropylen enthält und wobei das Polyethylen einen Schmelzflussindex [MFI 2,16kg@190°C] bestimmt nach der in der Beschreibung angegebenen Methode ISO 1133 von kleiner 10g/10min, vorzugsweise von 0,01 bis 2g/10min und das Polypropylen einen Schmelzflussindex [MFI 2,16kg@230°C] bestimmt nach der in der Beschreibung angegebenen Methode von kleiner 50g/10min, vorzugsweise von 0,01 bis 25 g/10min aufweist, ein Verfahren zur Herstellung solcher Gemenge sowie deren Verwendung.

Polyolefine, insbesondere die Homo- und Co-Polymere aus der Klasse der Polyethylene, Polypropylene und Polybutene bilden die größte Klasse der gängigen Kunststoffe und verzeichnen die weltweit größten Produktionsmengen. Wesentliche Einsatzgebiete dieser Materialien sind Folien, Verpackungen und diverse Spritzgussteile, z.B. für den Automobilbau. Gerade im Automobilbau kommt es darauf an, diese Spritzgussteile in einer ausgewogenen Balance aus Festigkeit und Schlagzähigkeit herzustellen, um beste Alltagstauglichkeit sicher zu stellen.

Um diese Balance zu gewährleisten werden häufig Mischungen eingesetzt, die eine Komponente aufweist, die die Festigkeit sicherstellen soll, meistens ein kristallines Polypropylen, und eine weitere Komponente, die die Schlagzähigkeit sicherstellen soll, häufig eine Polyethylen-reiche Komponente. Letztere Komponente ist häufig gummiartig und mitunter klebrig, weshalb der Anteil dieser Komponente im Produktionsprozess nicht beliebig erhöht werden kann, weil die Mischung sonst nicht mehr verarbeitet werden kann, weil Teile der Anlagen verkleben.

Um die Qualität von heterophasigen Polymermischungen, insbesondere solchen die Polyethylen und Polypropylen aufweisen, zu erhöhen, werden häufig Additive eingesetzt, um, die für die Festigkeit verantwortliche kristallin strukturierte Polypropylenmatrix mit der weichen, für die Schlagkraftaufnehmende, Polyethylen-reiche Fraktion verträglich zu machen.

EP 0884353 A1 beschreibt eine synergistische Kombinationszusammensetzung, die ein statistisches Ethylen/Propylen-Copolymer und ein statistisches Ethylen/α-Olefin-Copolymer mit niedriger bis sehr niedriger Dichte umfasst, wobei das α-Olefin wenigstens 4 Kohlenstoffatome enthält. Sie betrifft weiterhin Polyolefinzusammensetzungen, insbesondere Polypropylenzusammensetzungen, die die Kombinationszusammensetzung umfassen. Das statistische Ethylen/α-Olefin-Copolymer weist ein MFI von 0,1 bis 30 dg/min.

EP 1418205 A1 beschreibt Polymerzusammensetzungen für Spritzgussformkörper enthaltend Polyethylen und Polypropylen sowie ein Terpolymer aus den Monomeren Ethen, Propen und 1-Buten als amorphes Polyalpha-Olefin. Das Polyethylen weist einen Schmelzflussindex MFI (2,16 kg, 190 °C) von 70 und das Polypropylen einen Schmelzflussindex (2,16 kg, 230 °C) von 1200g/10min auf.

US 2016102230 A1 beschreibt Zusammensetzungen, die zur Herstellung von Heißschmelzklebern verwendet werden. Die Zusammensetzungen weisen Polyethylen und Polypropylen sowie ein amorphes Polyalpha-Olefin aus den Monomeren Ethen, Propen und 1-Buten auf.

US 2018134884 A1 beschreibt den Einsatz von C₃-C₂-Blockcopolymeren und Styrol-Ethylen-Butylen-Styrol (SEBS) Gummikomponenten mit einem MFI von maximal 30dg/min.

US 2019218383 A1 beschreibt Polymerzusammensetzungen die von 1 bis 30 Gew.-% eines Copolymers umfassen, erhältlich durch Umsetzung von Ethylen mit einem α-Olefin mit 3 bis 10 Kohlenstoffatomen. Das Copolymer weist einen MFI von 100 bis 2000 dg/min und eine Molekulargewichtsverteilung (MWD) zwischen 1 und 5 auf.

WO 2011/119486 A1 beschreibt die Herstellung eines "Impact modified" Mischung auf Basis von Polyolefinen (PP oder HDPE) mittels eines Ethylen-α-Olefin Copolymers mit einem MWD deutlich unter 5.

CA 2102542 A1 beschreibt einen Gasphasen-Prozess zur Herstellung eines C₂-C₃ Copolymers mit einem maximalen MFI von 500 und erwähnt die Tatsache, dass das Material nach den Gasphasenreaktoren "non-sticky" anfällt. Ferner ist beschrieben, dass ein hoher Rubber-content im Prozess ein Problem darstellt.

In jüngerer Zeit besteht eine weitere Herausforderung darin, Polypropylen und/oder Polyethylen aufweisende Rezyklate zu Mischungen zu verarbeiten, die nach der Verarbeitung Materialeigenschaften aufweisen, die ähnlich denen sind, die unter Einsatz von neu hergestelltem Polyethylen und/oder Polypropylen erhalten werden können.

Aufgabe der vorliegenden Erfindung war deshalb die Bereitstellung von Gemengen von Polyolefinen, die eine oder mehrere der vorgenannten Aufgaben lösen.

Überraschenderweise wurde gefunden, dass Gemenge enthaltend mindestens zwei verschiedene Polyolefine, die als weiteren Bestandteil ein amorphes Polyalpha-Olefin enthalten, welches auf den Monomeren Ethen, Propen und 1-Buten basiert und dessen Viskosität bei 190°C von 200 mPa*s bis 200.000 mPa*s beträgt, eine oder mehrere der genannten Aufgaben lösen können.

Gegenstand der vorliegenden Erfindung sind deshalb Gemenge enthaltend mindestens zwei verschiedene Polyolefine, die sich dadurch auszeichnen, dass sie als weiteren Bestandteil ein amorphes Polyalpha-Olefin (APAO) enthalten, welches auf den Monomeren Ethen, Propen und 1-Buten basiert und dessen Viskosität bei 190°C bestimmt nach der unten im Abschnitt Messmethoden angegebenen Methode, von 200 mPa*s bis 200.000 mPa*s beträgt, wobei es als mindestens zwei verschiedene Polyolefine Polyethylen und Polypropylen enthält und wobei das Polyethylen einen Schmelzflussindex [MFI 2,16kg@190°C] bestimmt nach der in der Beschreibung angegebenen Methode ISO 1133 von kleiner 10g/10min, vorzugsweise von 0,01 bis 2g/10min und das Polypropylen einen Schmelzflussindex [MFI 2,16kg@230°C] bestimmt nach der in der Beschreibung angegebenen Methode von kleiner 50g/10min, vorzugsweise von 0,01 bis 25 g/10min aufweist.

Ebenfalls Gegenstand der vorliegenden Erfindung ist ein Verfahren zur Herstellung eines erfindungsgemäßen Gemenges sowie dessen Verwendung wie in den Ansprüchen definiert und nachfolgend näher beschrieben.

Die erfindungsgemäßen Gemenge haben den Vorteil, dass sie verbesserte Materialeigenschaften aufweisen. Insbesondere weisen die erfindungsgemäßen Gemenge eine gute bzw. verbesserte Schlagzähigkeit und ein gutes bzw. verbessertes Dehnverhalten bei einem moderaten Verlust an Zugfestigkeit auf.

Ein weiterer Vorteil der erfindungsgemäßen Gemenge besteht darin, dass diese, wenn Polyethylen und Polypropylen als verschiedene Polyolefine enthalten sind, eine gute Phasenverträglichkeit von Polyethylen und Polypropylen aufweisen.

Die erfindungsgemäßen Gemenge können wegen des Einsatzes des APAOs auch größere Mengen an Rezyklat, insbesondere Polyethylen- und/oder Propylen-Rezyklat enthalten, ohne dass die Materialeigenschaften sich soweit verschlechtern, dass das Material für den vorgesehenen Verwendungszweck nicht mehr brauchbar ist.

Die Trennung von Polymerabfällen kann derzeit häufig noch nicht sortenrein betrieben werden, so dass zum Beispiel in PE-Rezyklaten immer noch gewisse Mengen an PP-Polymeren und in PP-Rezyklaten noch geringe Mengen an PE-Polymeren enthalten sind. Gerade für Gemenge, die solche nicht sortenreinen Rezyklate enthalten, ist der erfindungsgemäße Einsatz des APAOs besonders vorteilhaft.

Die erfindungsgemäßen Gemenge, das erfindungsgemäße Verfahren und die erfindungsgemäße Verwendung der Gemenge werden nachfolgend beispielhaft beschrieben, ohne dass die Erfindung auf diese beispielhaften Ausführungsformen beschränkt sein soll. Sind nachfolgend Bereiche, allgemeine Formeln oder Verbindungsklassen angegeben, so sollen diese nicht nur die entsprechenden Bereiche oder Gruppen von Verbindungen umfassen, die explizit erwähnt sind, sondern auch alle Teilbereiche und Teilgruppen von Verbindungen, die durch Herausnahme von einzelnen Werten (Bereichen) oder Verbindungen erhalten werden können. Werden im Rahmen der vorliegenden Beschreibung Dokumente zitiert, so soll deren Inhalt, insbesondere bezüglich der in Bezug genommenen Sachverhalte vollständig zum Offenbarungsgehalt der vorliegenden Erfindung gehören. Werden nachfolgend Angaben in Prozent gemacht, so handelt es sich, wenn nicht anders angegeben um Angaben in Gewichts-%. Werden nachfolgend Mittelwerte, z.B. Molmassen-Mittelwerte angegeben, so handelt es sich, wenn nicht anders angegeben um das Zahlenmittel. Werden nachfolgend Stoffeigenschaften, wie z. B. Viskositäten oder ähnliches angegeben, so handelt es sich, wenn nicht anders angegeben, um die Stoffeigenschaften bei 25 °C. Werden in der vorliegenden Erfindung chemische (Summen-)Formeln verwendet, so können die angegebenen Indizes sowohl absolute Zahlen als auch Mittelwerte darstellen. Bei polymeren Verbindungen stellen die Indizes vorzugsweise Mittelwerte dar.

Die erfindungsgemäßen Gemenge enthaltend mindestens zwei verschiedene Polyolefine, zeichnen sich dadurch aus, dass sie als weiteren Bestandteil ein amorphes Polyalpha-Olefin enthalten, welches auf den Monomeren Ethen, Propen und 1-Buten basiert und dessen Viskosität bei 190°C bestimmt nach der unten im Abschnitt Messmethoden angegebenen Methode, von 200 mPa*s bis 200.000 mPa*s, vorzugsweise von 1.000 bis 150.000 mPa*s, bevorzugt von 2.000 bis 100.000 mPa*s und besonders bevorzugt 3.000 bis 50.000 mPa*s beträgt, wobei es als mindestens zwei verschiedene Polyolefine Polyethylen und Polypropylen enthält und wobei das Polyethylen einen Schmelzflussindex [MFI 2,16kg@190°C] bestimmt nach der in der Beschreibung angegebenen Methode ISO 1133 von kleiner 10g/10min, vorzugsweise von 0,01 bis 2g/10min und das Polypropylen einen Schmelzflussindex [MFI 2,16kg@230°C] bestimmt nach der in der Beschreibung angegebenen Methode von kleiner 50g/10min, vorzugsweise von 0,01 bis 25 g/10min aufweist.

Als mindestens zwei verschiedene Polyolefine enthält das erfindungsgemäße Gemenge Polyethylen und Polypropylen. Vorzugsweise beträgt der Anteil an geringer-vorkommendem Polyolefin an dem Gemenge von 1 bis 45 Gew.-%, bevorzugt 2 bis 30 Gew.-% und besonders bevorzugt 5 bis 20 Gew.-% und der Anteil am mehrheitlich vorkommenden Polyolefin an dem Gemenge beträgt vorzugsweise von 55 bis 99 Gew.-%, bevorzugt 70 bis 98 Gew.-% und besonders bevorzugt von 80 bis 95 Gew.-% bezogen auf die Gesamtmasse der im Gemenge vorkommenden mindestens zwei verschiedenen Polyolefine. Insbesondere wenn es sich bei den mindestens zwei verschiedenen Polyolefinen ganz oder teilweise um Rezyklate handelt, sind die vorgenannten Anteile bevorzugt.

Es kann vorteilhaft sein, wenn mindestens eines der zwei verschiedenen Polyolefine zumindest teilweise, vorzugsweise zu mehr als 50 Gew.-% und bevorzugt vollständig ein Rezyklat ist. Bevorzugt sind von den mindestens zwei verschiedenen Polyolefinen beide Polyolefine zumindest teilweise, bevorzugt zu mehr als 50 Gew.-% und besonders bevorzugt vollständig Rezyklate.

Der Anteil an amorphem Polyalpha-Olefin in dem erfindungsgemäßen Gemenge beträgt vorzugsweise von 1 bis 25 Gew.-%, bevorzugt 2 bis 15 Gew.-%, besonders bevorzugt 3 bis 10 Gew.-% und ganz besonders bevorzugt 5 bis 7,5 Gew.-% bezogen auf die Gesamtmasse des Gemenges.

Das amorphe Polyalpha-Olefin weist vorzugsweise eine Polydispersität (Mw/Mn) von 5 bis 10 und/oder, bevorzugt und, eine Glasübergangstemperatur von -45°C bis -25°C auf, jeweils bestimmt nach der unten im Abschnitt Messmethoden angegebenen Messmethode.

Vorzugsweise weist das amorphe Polyalpha-Olefin einen Schmelzflussindex [MFI 2,16kg@140°C] von 40 bis 10.000, vorzugsweise von 50 bis 5.000 und bevorzugt von 100 bis 2.000 bestimmt nach der unten im Abschnitt Messmethoden angegebenen Messmethode auf.

In dem amorphen Polyalpha-Olefin, das auf den Monomeren Ethylen, Propylen und 1-Buten basiert, beträgt der Anteil der Monomeren Propylen oder 1-Buten größer 50 Gew.-%, bevorzugt zu 51 bis 98 Gew.- % und der Anteil der Summe der verbleibenden Monomere Ethylen und 1-Buten bzw. Ethylen und Propen beträgt jeweils kleiner 50 Gew.-%, jeweils bezogen auf die Summe der Anteile an Ethylen, Propylen und 1-Buten. Der Anteil an Ethylen beträgt bevorzugt von 1 bis 15 Gew.-% bezogen auf die Summe der Monomeren Ethylen, Propylen und 1-Buten.

Es kann vorteilhaft sein, wenn das amorphe Polyalpha-Olefin Isotaktizitäten der 1-Buten- bzw. Propen-Blöcke von weniger als 80 % der mmmm-Pentade bestimmt nach der in der Beschreibung angegebenen Messmethode aufweist.

Das Gemenge ist vorzugsweise eine Mischung der genannten Bestandteile, bevorzugt eine Granulatmischung von Granulaten der genannten Bestandteile. Es kann vorteilhaft sein, wenn das Gemenge als Mischgranulat vorliegt, beim der die Granulate jeweils alle Bestandteile enthalten. Solche Mischgranulate haben den Vorteil, dass bei deren Verarbeitung, z.B. durch Spritzgießen, Bauteile erhalten werden, in denen die Bestandteile homogener verteilt sind, was zu besseren Materialeigenschaften führen kann.

Das erfindungsgemäße Gemenge kann weitere Bestandteile wie z. B. Additive, Füllstoffe und/oder Pigmente (organische oder anorganische) aufweisen. Als Füllstoffe weisen die erfindungsgemäßen Gemenge vorzugsweise Fasern, bevorzugt Glasfasern, Mineralfasem, Holzfasern oder sonstige Faserkomponenten, auf. Auf diese Weise kann die Festigkeit der erfindungsgemäßen Gemenge verbessert werden. Die Gemenge können dadurch in Anwendungen eingesetzt oder verwendet werden, die höhere mechanische Anforderungen an das eingesetzt Material stellen, wie z. B. bei der Verwendung als oder zur Herstellung von Compounds oder Compositen. Vorzugsweise weist das Gemenge von 0,01 bis 3 Gew.-% mindestens eines Antioxidants, bezogen auf die Summe aus APAO und Antioxidantien auf. Als Antioxidantien können jegliche als Antioxidantien und/oder Inhibitoren, also Substanzen, die den Fortgang einer radikalischen Reaktion stoppen, bekannten Substanzen eingesetzt werden. Vorzugsweise enthält das erfindungsgemäße Gemenge sterisch gehinderte Amine, z.B. Piperdin-Derivate, bevorzugt sterisch gehinderte Phenole, wie z.B. Irganox 1010, Naugard XL1, Songnox 1035. Auf diese Weise kann der Abbau des APAO und/oder ein vergilben des APAO vermieden oder vermindert werden.

Das Gemenge kann vorzugsweise von 0,01 bis 3 Gew.-% mindestens eines Abbauproduktes eines Radikalbildners, bezogen auf die Summe aus APAO und Abbauprodukten von Radikalbildnem, aufweisen. Bevorzugt weist das erfindungsgemäße Gemenge Benzoesäure, Methanol, Butanol, tert.-Butanol, Propionsäure und/oder, vorzugsweise oder, 2,5-Dimethylhexanol als Abbauproduktes eines Radikalbildners auf.

Die erfindungsgemäßen Gemenge können nach bekannten Verfahren zur Herstellung von Gemengen hergestellt werden. Vorzugsweise werden die erfindungsgemäßen Gemenge durch das nachfolgend beschriebene Verfahren zur Herstellung von Gemengen hergestellt, welches sich dadurch auszeichnet, dass die Bestandteile des Gemenges vermengt werden.

Verzugsweise werden in dem erfindungsgemäßen Verfahren die Bestandteile als Pulver oder Granulate eingesetzt und vermischt. Es kann vorteilhaft sein, wenn eine so erhaltene Granulatmischung zu einem Mischgranulat verarbeitet wird, z.B. in dem die Granulatmischung extrudiert wird. So kann beispielsweise über eine Mischtrommel die Granulat-Mischung aufgegeben werden oder über Hopper die Granulate über einen Mischungstrichter gefüllt und so dann homogen in einen Mischextruder einem weiteren Granulierprozess zugeführt werden und dieses additivierte Granulat dann den weiteren Verarbeitungsprozessen unterworfen werden. Alternativ lassen sich auch über eine Sequenz aus Extrudern die Komponenten als Schmelzestrom in einen Extruder dosieren, der dann in einen Formgebungsprozess mündet. Ferner kann über einen dieser Prozesse auch das finale Werkstück über einen Extrusions- oder Spritzgussprozess direkt fabriziert werden, ohne über den Umweg des Granulats zu gehen.

Es kann vorteilhaft sein, wenn das erfindungsgemäße Verfahren einen Schritt enthält, der die Herstellung von Verpackungen, Folien, Spritzgussteilen, Rohren, Schläuchen, Fasern, Textilien, Flaschen, Kunststoffgehäuse, Masterbatch Compounds für verbesserte Pigment Dispergierung, Konstruktionskunststoffen im Automobil oder Verkehrsbereich, umfasst.

Die erfindungsgemäßen Gemenge bzw. erfindungsgemäße hergestellten Gemenge können für alle Anwendungszwecke eingesetzt werden, für die Polyolefin-Gemenge üblicherweise eingesetzt werden. Vorzugsweise werden die erfindungsgemäßen Gemenge bzw. die erfindungsgemäße hergestellten Gemenge als oder zur Herstellung von Verpackungen, Folien, Spritzgussteilen, Rohren, Schläuchen, Fasern, Textilien, Flaschen, Kunststoffgehäuse, Masterbatch Compounds für verbesserte Pigment Dispergierung, Konstruktionskunststoffe im Automobil oder Verkehrsbereich, verwendet bzw. eingesetzt.

Auch ohne weitere Ausführungen wird davon ausgegangen, dass ein Fachmann die obige Beschreibung im weitesten Umfang nutzen kann. Die bevorzugten Ausführungsformen und Beispiele sind deswegen lediglich als beschreibende, keinesfalls als in irgendeiner Weise limitierende Offenbarung aufzufassen.

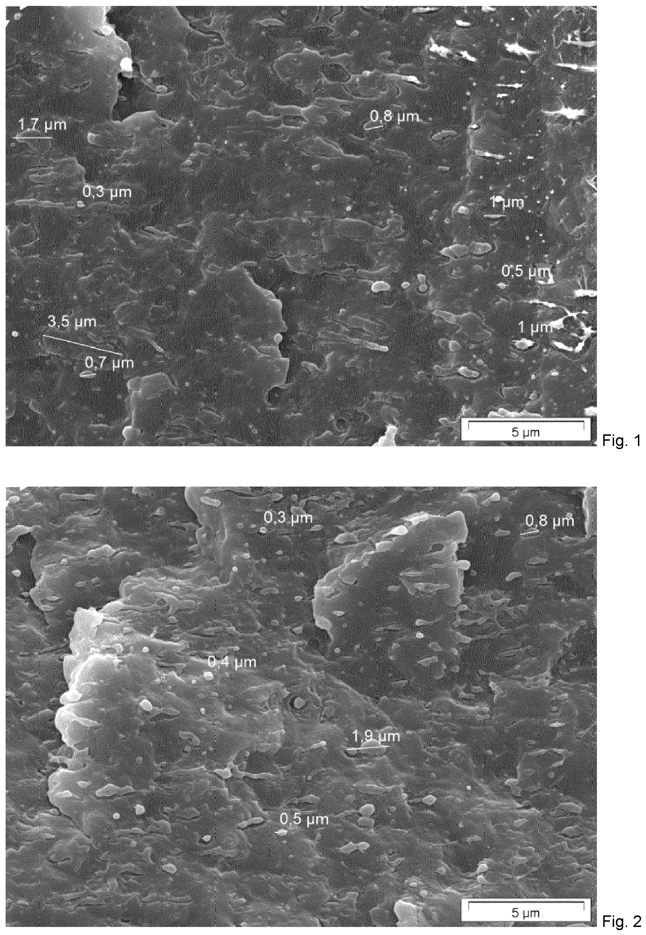

Der Gegenstand der vorliegenden Erfindung wird an Hand der Figuren Fig. 1 und Fig. 2 näher erläutert, ohne dass der Gegenstand der vorliegenden Erfindung darauf beschränkt sein soll.
Fig. 1 zeigt eine rasterelektronenmikroskopische Aufnahme der Bruchkante des Probenkörpers gemäß Beispiel 1.11, vorbereitet und aufgenommen wie in Beispiel 2 beschrieben.
Fig. 2 zeigt eine rasterelektronenmikroskopische Aufnahme der Bruchkante des Probenkörpers gemäß Beispiel 1.12, vorbereitet und aufgenommen wie in Beispiel 2 beschrieben.

Der Gegenstand der vorliegenden Erfindung wird in den nachfolgenden Beispielen näher erläutert, ohne dass der Gegenstand der vorliegenden Erfindung darauf beschränkt sein soll.

### Messverfahren:

Kerbschlagzähigkeit: Die Kerbschlagzähigkeit wurde gemäß IZOD ISO 180/1A unter Verwendung einer Prüfapparatur vom Typ 5102.100/00 der Firma Zwick bestimmt.

Zugprüfung: Die Zugversuche wurden gemäß EN ISO 527-1 hergestellt und durchgeführt. Zum Einsatz kam Prüfapparatur Typ BT1-FB010TH.D30 der Firma Zwick.

Optische Bestimmung der Domänen: Als Analysegeräte wurden ein Scanner Epson V850 Pro und ein Rasterelektronenmikroskop (REM) JEOL SM IT300 verwendet.

Glasübergangstemperatur [T_{g}]: Die Thermoanalysen wurden gemäß DIN EN ISO 11357 durchgeführt. Zum Einsatz kam das DSC1 der Firma Mettler Toledo und die Auswertung erfolgte mittels der Stare Software 10.0. Bei teilkristallinen Polymerproben wird der Einfluss der thermischen Vorgeschichte erst beim Aufschmelzen der gesamten Probe beseitigt; deshalb ist zur Bestimmung des T_{g} ein zweiter Heizlauf nötig, um bei der definierter Heiz- und Kühlrate reproduzierbare Ergebnisse zu erhalten. Vorzugsweise sollte mit einer einheitlichen Heizrate von 10K/min bis Tg+50°C und Kühlrate von 20K/min bis Tg-50°C gearbeitet werden. Die Glasübergangstemperatur ist die Probentemperatur, bei der die Hälfte der Änderung der spezifischen Wärmekapazität [0,5 □ c_{P}] erreicht ist. Sie ist die Temperatur des Schnittpunktes der Mittellinie zwischen den extrapolierten Basislinien vor und nach dem Glasübergang mit der Messkurve.

Molekulargewichtsbestimmung: Mw steht dabei für das gewichtsmittlere Molekulargewicht und Mn für das zahlenmittlere Molekulargewicht. Die Bestimmung der Molekulargewichte Mw und Mn erfolgt mittels HT-GPC [Hochtemperatur-Gelpermeations-Chromatographie] wie in DIN 55 672 beschrieben. Konkret wird die analytische HT-GPC mittels eines PL220-Ofens (Agilent, Waldbronn) mit dazugehöriger isokratischer Pumpe bei 150 °C durchgeführt. Als mobile Phase wurde 1,2,4-Trichlorbenzol (TCB) (Merck, Darmstadt) versetzt mit ~1 g/L Butylhydroxytoluol (BHT) mit einer Flussrate von 1 mL/min und als stationäre Phase eine Agilent PLgel Olexis Guard (50 × 7.5 mm, Vorsäule) sowie drei Agilent PLgel Olexis (300 × 7.5 mm) verwendet. Die Detektion erfolgte mittels eines IR Detektors (Model IR4, PolymerChar, Valencia, Spanien). Ausgewertet wurden die Datensätze mittels einer Polystyrol-Kalibration (EasiCal PS-1, Agilent) durch die Software WinGPC (Polymer Standards Service, Mainz). Die Polydispersität (Mw/Mn), auch Molekulargewichtsverteilung genannt, ergibt sich durch Teilen des gewichtsmittleren Molekulargewichts durch das zahlenmittlere Molekulargewicht.

Viskosität bei 190 °C: Die Bestimmung der Viskosität bei 190 °C erfolgt durch Messungen mit einem Rotations-Viskosimeter analog DIN 53 019. Die Messungen erfolgen mit dem Kegel-Platte-Viskosimeter CAP 2000+ von der Firma Brookfield mit einer viskositätsabhängigen Scherrate analog der folgenden Tabelle a:

**Tabelle a:**

| Kegel | Schergeschwindigkeit | Eta (bei 10 % Auslastung des Drehmoments) | Eta (bei 100 % Auslastung des Drehmoments) |
|---|---|---|---|
| 07 | 10 s-1 | 6.300 mPas | 63.000 mPas |
| 08 | 10 s-1 | 25.000 mPas | 250.000 mPas |
| 07 | 30 s-1 | 2.100 mPas | 21.000 mPas |

Zur Kalibrierung des Brookfield Viskosimeters wurde eine Newtonsche Normalprobe Typ 500.000 BW eingesetzt. Diese wurde vom Zentrum für Messen und Kalibrieren & Analytik GmbH bezogen und mit einem dazugehörigen Kalibrierschein ausgestellt. Die Gerätekalibrierung erfolgt nur bei DKD - Öl Wechsel, mittels DKD-ÖL von der Firma ZMK& ANALYTIK GmbH. Diese wird mit dem Kegel 7 durchgeführt. Zuerst wird eine Eingangsmessung von dem neuen DKD-ÖI gemacht. Danach beginnt die Kalibrierung des Gerätes. Die Newtonsche Normalprobe wird direkt auf der Spindle eingewogen. Dazu stellt man sie kopfüber in einen 100 ml Erlenmeyerkolben und wiegt die entsprechende Menge ein. Die Spindel wird anschließend ins Viskosimeter eingehängt und abgesenkt. Nach Einhaltung der Vortemperierung von mind. 3 min wird am Bedienfeld Spindel gedrückt und mit Enter bestätigt. Es erscheint die Abfrage Calibrate YES / NO. Mit Yes gelangt man in den Kalibriermodus. Anschließend wird die gewünschte Temperatur und die dynamische Viskosität (siehe aktuellen Kalibrierschein) des Fluid eingegeben und bestätigt. Hier ist zu beachten, dass die Viskositätsangabe in cP abgefragt wird (cP = mPas). Bei der Abfrage SPEED wird 10s-1 eingetragen und mit Enter bestätigt. Mit Run startet nun die Kalibrierung. Nach der Kalibrierung wird mit Enter der Kalibrierwert gespeichert.

Schmelzflussindex (MFI): Der MFI 2,16kg@230°C und 2,16kg@190°C wurde bestimmt gemäß ISO 1133-1:2011 am MFlow der Firma Zwick. Die Schmelze-Massefließrate (MFR) und die Schmelze-Volumenfließrate (MVR) werden durch Extrudieren eines geschmolzenen Materials aus dem Zylinder eines Plastometers durch ein Extrusionswerkzeug mit festgelegter Länge und festgelegtem Durchmesser unter gegebenen Bedingungen von Temperatur und aufgebrachter Last bestimmt. Liegen bei einer Temperatur von 190°C die MFI-Werte mit einer Last von 2,16kg bei über 1.000 so ist die Messtemperatur auf 140°C zu senken, um verlässlichere Messwerte zu erhalten (MFI 2,16@140°C).

Zur Messung der MFR (Verfahren A) werden zeitlich festgelegte Extrudatabschnitte gewogen und für die Berechnung der Extrusionsgeschwindigkeit, in g/10 min, angewendet.

Zur Messung der MVR (Verfahren B) wird die Weglänge, die der Kolben in einer festgelegten Zeit zurücklegt, oder die Zeit, die der Kolben zum Zurücklegen einer festgelegten Weglänge benötigt, aufgezeichnet und für die Berechnung der Extrusionsgeschwindigkeit, in cm³/10 min, angewendet.

Die MVR kann in die MFR umgewandelt werden, oder umgekehrt, wenn die Dichte der Schmelze des Materials bei der Prüftemperatur bekannt ist.

Isotaktizität:
Die Polymerzusammensetzung und Isotaktiziät [% der mmmm-Pentade] wird mittels Hochtemperatur ¹³C-NMR bestimmt, wie in den folgenden Publikationen beschrieben:
A. Zambelli et al: Macomolecules, 8, 687 (1975) und A. Filho, G. Galland: J. Appl. Polym. Sci., 80, 1880 (2001).

### Beispiele:

### Eingesetzte Stoffe:

| | | |
|---|---|---|
| Polypropylen | RB307MO | Borealis AG |
| Polypropylen | HF955MO | Borealis AG |
| Polypropylen-Rezyklat | procyclen^{®} PP 10 M10 C09 | ALBA Recycling GmbH |
| Polyetheylen-Rezyklat | recythen^{®} HDPE | ALBA Recycling GmbH |
| Polyethylen | BorPure^{™} MB5568 | Borealis AG |
| Polyethylen | BB2581 | Borealis AG |
| APAO | VESTOPLAST^{®} 888 | Evonik Resource Efficiency GmbH |
| APAO | VESTOPLAST^{®} 704 | Evonik Resource Efficiency GmbH |
| Block-Copolymer | INFUSE^{™} 9807 | The Dow Chemical Company |
| Polypropylen | L-MODU^{™} S600 | Idemitsu Kosan Co., Ltd. |
| Gering-kristallines PE/PP-Copolymer | LICOCENE^{®} PP2602 | Clariant AG |

**Tabelle b: Parameter einiger Einsatzstoffe**

| Additiv | Mw/Mn | MFI 2,16@190°C [g/10 min] | MFI 2,16kg@140°C [g/10 min] | Tg [°C] | Viskosität@190 °C [mPas] |
|---|---|---|---|---|---|
| VESTOPLAST^{®} 888 | 6,8 | 129 | n.m. | -23 | ∼ 90.000 |
| VESTOPLAST^{®} 704 | 5,9 | >1.000 | 930 | -28 | ~ 4.000 |
| INFUSE^{™} 9807 | 2,1 | 15 | n.m. | -62 | >1.000.000 |
| L-MODU^{™} S600 | 1,9 | 173 | 44 | -10 | ~ 40.000 |
| LICOCENE^{®} PP2602 | 1,8 | >1.000 | 1300 | -9 | ~ 2.500 |

**Tabelle c: Parameter einiger Einsatzstoffe (Herstellerangaben)**

| Polymer | MFI 2,16@190°C [g/10 min] | MFI 2,16kg@230°C [g/10 min] |
|---|---|---|
| RB307MO | - | 1,5 |
| HF955MO | - | 20,0 |
| BorPure^{™} MB5568 | 0,8 | - |
| BB2581 | 0,3 | - |
| procyclen^{®} PP 10 M10 C09 | | 10,0 |
| recythen^{®} HDPE | | |

### Beispiel 1:

Es wurden Granulat-Mischungen unter Verwendung der in Tabelle 1 angegebenen Rohstoffe und Mengen hergestellt. Das Mischen erfolgte manuell durch Zugabe aller Ingredienzien in einen PE Beutel, dessen Inhalt anschließend dem Trichter eines gravimetrischen Dosiersystems zugeführt wurde. Anschließend wurde die Granulat-Mischung in einem Extruder (Leistritz ZSE 27 MAXXX 44LD) bei 210 °C und einer Drehzahl von 300 rpm zu einem Mischgranulat verarbeitet.

**Tabelle 1: Eingesetzte Rohstoffe und Mengen (in Gew.-%) zur Herstellung der Granulatmischungen**

| Beispiel | PP | PE | APAO |
|---|---|---|---|
| 1.1 | 65% HF955MO | 35% BB2581 | - |
| 1.2 | 61% HF955MO | 33% BB2581 | 6% VESTOPLAST^{®} 888 |
| 1.3 | 61% HF955MO | 33% BB2581 | 6% VESTOPLAST^{®} 704 |
| 1.4 | 61% HF955MO | 33% BB2581 | 6% L-MODU^{™} S600 |
| 1.5 | 61% HF955MO | 33% BB2581 | 6% LICOCENE^{®} PP2602 |
| 1.6 | 61% HF955MO | 33% BB2581 | 6% INFUSE^{™} 9807 |
| 1.7 | 65% HF955MO | 35% BorPure^{™}MB5568 | - |
| 1.8 | 61% HF955MO | 31% BorPure^{™}MB5568 | 6% VESTOPLAST^{®} 888 |
| 1.9 | 65% RB307MO | 35% BB2581 | - |
| 1.10 | 61% RB307MO | 33% BB2581 | 6% VESTOPLAST^{®} 888 |
| 1.11 | 65% RB307MO | 35% BorPure^{™}MB5568 | - |
| 1.12 | 61% RB307MO | 33% BorPure^{™}MB5568 | 6% VESTOPLAST^{®} 888 |
| 1.13 | 67% RB307MO | 33% BorPure^{™}MB5568 | |
| 1.14 | 63% RB307MO | 31% BorPure^{™}MB5568 | 6% VESTOPLAST^{®} 888 |

Aus diesem Mischgranulat wurden anschließend in einer Spritzgussmaschine (Engel ES200/50HL) bei einer Spritztemperatur von 230 °C einem Spritzdruck von 600 bar und einer Zykluszeit von 45 sec. Zugprüfkörper (Zugprüfknochen) gemäß DIN EN ISO 527-2 hergestellt.

Die Hälfte der Zugprüfknochen wurde zur Bestimmung der Kerbschlagzähigkeit (KSZ) gemäß IZOD ISO 180/1A, die andere Hälfte zur Zugprüfung gemäß EN ISO 527-1 verwendet. Die Ergebnisse der Ausprüfungen sind Tabelle 2 zu entnehmen. Darin bedeuten: E_{T} = Zugmodul, σ_{M} = Zugfestigkeit, σ_{Y} = Streckspannung, ε_{Y} = Streckdehnung, ε_{tB} = Nominelle Bruchdehnung und ε_{B} = Bruchdehnung.

**Tabelle 2: Ergebnisse der Ausprüfungen**

| Beispiel | KSZ | Zugprüfung gemäß EN ISO 527-1 | | | | | |
|---|---|---|---|---|---|---|---|
| | [kJ/m²] | E_{T} [MPa] | σ_{M} [MPa] | σ_{Y} [MPa] | ε_{Y} [%] | E_{tB} [%] | ε_{B} [%] |
| 1.1 | 2,63 | 926 | 35,6 | | 7,2 | 8,8 | 7,2 |
| 1.2 | 1,51 | 848 | 29,6 | | | | 5,3 |
| 1.3 | 1,54 | 825 | 29,2 | | | | 4,5 |
| 1.4 | 1,87 | 876 | 32,8 | | | | 6,5 |
| 1.5 | n.m. | n.m. | n.m. | n.m. | n.m. | n.m. | n.m. |
| 1.6 | 6,06 | 840 | 30,6 | 30,6 | 6,8 | 9 | 6,7 |
| 1.7 | 3,60 | 889 | 36,3 | 36,3 | 7,4 | 11 | |
| 1.8 | 2,34 | 774 | 30,5 | | | | 6,2 |
| 1.9 | 13,03 | 602 | 25,9 | 25,9 | 12,0 | 160 | |
| 1.10 | 14,46 | 525 | 23,3 | 23,2 | 13,0 | 280 | |
| 1.11 | 13,62 | 585 | 25,4 | 25,4 | 12,0 | 150 | |
| 1.12 | 24,37 | 505 | 22,7 | 22,8 | 13,0 | 270 | |
| 1.13 | 13,60 | | 25,0 | | | 100 | |
| 1.14 | 24,90 | | 22,1 | | | 186 | |

| | | | | | | | |
|---|---|---|---|---|---|---|---|
| n.m.: not measured | | | | | | | |

Wie den Tabellen 1 und 2 entnommen werden kann, können durch Zusatz von APAOs als Additive zu PE-/PP-Granulatmischungen Mischgranulate erhalten werden, aus denen Formköper spritzgegossen werden können, die bei nur geringfügig verschlechterten Zugfestigkeiten eine deutlich besseres (höheres) Dehnungsverhalten als auch eine bessere (höhere) Schlagzähigkeit aufweisen. Dies gilt insbesondere für solche Gemenge, die neben dem APAO mindestens eine weitere amorphe oder zumindest teilkristalline Polyolefinkomponente enthalten.

### Beispiel 2:

Probenkörper der Beispiele 1.11 und 1.12 wurden in flüssigem Stickstoff abgekühlt und jeweils längs und quer gebrochen, mit Palladium besputtert und anschließend im REM untersucht. Aufnahmen sind in den Figuren Fig. 1 und Fig. 2 wiedergegeben.

In den Proben gemäß Beispielen 1.11 und 1.12 sind auf den Bildern vermehrt kleinere Domänen erkennbar, die in Fig. 2 homogener wirken. Die Anbindung scheint deswegen besser zu sein, was auch die besseren mechanischen Eigenschaften des Beispiels 1.12 zeigen (Tabelle 2).

## Patentansprüche

1. Gemenge enthaltend mindestens zwei verschiedene Polyolefine, **dadurch gekennzeichnet, dass** es als weiteren Bestandteil ein amorphes Polyalpha-Olefin enthält, welches auf den Monomeren Ethen, Propen und 1-Buten basiert und dessen Viskosität bei 190°C gemessen nach der in der Beschreibung angegeben Methode, von 200 mPa*s bis 200.000 mPa*s beträgt, wobei es als mindestens zwei verschiedene Polyolefine Polyethylen und Polypropylen enthält und wobei das Polyethylen einen Schmelzflussindex [MFI 2,16kg@190°C] bestimmt nach der in der Beschreibung angegebenen Methode ISO 1133 von kleiner 10g/10min, vorzugsweise von 0,01 bis 2g/10min und das Polypropylen einen Schmelzflussindex [MFI 2,16kg@230°C] bestimmt nach der in der Beschreibung angegebenen Methode von kleiner 50g/10min, vorzugsweise von 0,01 bis 25 g/10min aufweist.

2. Gemenge nach Anspruch 1, **dadurch gekennzeichnet, dass** mindestens eines der zwei verschiedenen Polyolefine zumindest teilweise, vorzugsweise vollständig, ein Rezyklat ist.

3. Gemenge nach Anspruch 1 oder 2, **dadurch gekennzeichnet, dass** der Anteil an amorphem Polyalpha-Olefin von 1 bis 25, bevorzugt 2 bis 15, besonders bevorzugt 3 bis 10 Gew.-% und ganz besonders bevorzugt 5 bis 7,5 Gew.-% bezogen auf die Gesamtmasse des Gemenges beträgt.

4. Gemenge nach einem der Ansprüche 1 bis 3, **dadurch gekennzeichnet, dass** der Anteil an geringer-vorkommendem Polyolefin an dem Gemenge von 1 bis 45 Gew.-%, bevorzugt von 2 bis 30 Gew.-% und besonders bevorzugt von 5 bis 20 Gew.-% und der Anteil am mehrheitlich vorkommendem Polyolefin an dem Gemenge von 55 bis 99 Gew.-%, bevorzugt von 70 bis 98 Gew.-% und besonders bevorzugt von 80 bis 95 Gew.-% bezogen auf die Gesamtmasse der mindestens zwei verschiedenen Polyolefine beträgt.

5. Gemenge nach einem der Ansprüche 1 bis 4, **dadurch gekennzeichnet, dass** das amorphe Polyalpha-Olefin eine Polydispersität von 5 bis 10 und/oder, bevorzugt und, eine Glasübergangstemperatur von -45°C bis -25°C aufweist, jeweils bestimmt nach der in der Beschreibung angegebenen Messmethode.

6. Gemenge nach einem der Ansprüche 1 bis 5, **dadurch gekennzeichnet, dass** das amorphe Polyalpha-Olefin einen Schmelzflussindex [MFI 2,16kg@140°C] von 40 bis 10.000 bestimmt nach der in der Beschreibung angegebenen Messmethode aufweist.

7. Gemenge nach einem der Ansprüche 1 bis 6, **dadurch gekennzeichnet, dass** das amorphe Polyalpha-Olefin auf den Monomeren Ethylen, Propylen und 1-Buten basiert, wobei der Anteil der Monomeren Propylen oder 1-Buten größer 50 Gew.-% beträgt und der Anteil der Summe der verbleibenden Monomere Ethylen und 1-Buten bzw. Ethylen und Propen jeweils kleiner 50 Gew. -%, jeweils bezogen auf die Summe der molaren Anteile an Ethylen, Propylen und 1-Buten, beträgt.

8. Gemenge nach einem der Ansprüche 1 bis 7, **dadurch gekennzeichnet, dass** das amorphe Polyalpha-Olefin Isotaktizitäten der 1-Buten- bzw. Propen-Blöcke von weniger als 80 % der mmmm-Pentade bestimmt nach der in der Beschreibung angegebenen Messmethode aufweist.

9. Verfahren zur Herstellung von Gemengen gemäß einem der Ansprüche 1 bis 8 **dadurch gekennzeichnet, dass** die Bestandteile vermengt werden.

10. Verfahren nach Anspruch 9, **dadurch gekennzeichnet, dass** die Bestandteile als Pulver oder Granulate eingesetzt und vermischt werden.

11. Verfahren nach Anspruch 10, **dadurch gekennzeichnet, dass** die Granulatmischung zu einem Mischgranulat extrudiert wird.

12. Verfahren nach einem der Ansprüche 9 bis 11, **dadurch gekennzeichnet, dass** es einen Schritt enthält, der die Herstellung von Verpackungen, Folien, Spritzgussteilen, Rohren, Schläuchen, Fasern, Textilien, Flaschen, Kunststoffgehäuse, Masterbatch Compounds für verbesserte Pigment Dispergierung, Konstruktionskunststoffen im Automobil oder Verkehrsbereich, umfasst.

13. Verwendung eines Gemenges gemäß einem der Ansprüche 1 bis 8 als oder zur Herstellung von Verpackungen, Folien, Spritzgussteilen, Rohren, Schläuchen, Fasern, Textilien, Flaschen, Kunststoffgehäuse, Masterbatch Compounds für verbesserte Pigment Dispergierung, Konstruktionskunststoffe im Automobil oder Verkehrsbereich.

## Claims

1. Blend containing at least two different polyolefins, **characterized in that** it contains as a further constituent an amorphous poly-alpha-olefin which is based on the monomers ethene, propene and 1-butene and has a viscosity at 190°C measured according to the method reported in the description of 200 mPa*s to 200 000 mPa*s, wherein it contains polyethylene and polypropylene as at least two different polyolefins and wherein the polyethylene has a melt flow index [MFI 2.16kg@190°C] determined according to the method ISO 1133 reported in the description of less than 10g/10min, preferably of 0.01 to 2g/10min, and the polypropylene has a melt flow index [MFI 2.16kg@230°C] determined according to the method reported in the description of less than 50g/10min, preferably of 0.01 to 25 g/10min.

2. Blend according to Claim 1, **characterized in that** at least one of the two different polyolefins is at least partially, preferably completely, a recyclate.

3. Blend according to Claim 1 or 2, **characterized in that** the proportion of amorphous poly-alpha-olefin is from 1% to 25%, preferably 2% to 15%, particularly preferably 3% to 10% by weight and very particularly preferably 5% to 7.5% by weight based on the total mass of the blend.

4. Blend according to any of Claims 1 to 3, **characterized in that** the proportion of minority polyolefin in the blend is from 1% to 45% by weight, preferably from 2% to 30% by weight and particularly preferably from 5% to 20% by weight and the proportion of the majority polyolefin in the blend is from 55% to 99% by weight, preferably from 70% to 98% by weight and particularly preferably from 80% to 95% by weight based on the total mass of the at least two different polyolefins.

5. Blend according to any of Claims 1 to 4, **characterized in that** the amorphous poly-alpha-olefin has a polydispersity of 5 to 10 and/or, preferably and, a glass transition temperature of -45°C to -25°C, in each case determined according to the method of measurement reported in the description.

6. Blend according to any of Claims 1 to 5, **characterized in that** the amorphous poly-alpha-olefin has a melt flow index [MFI 2.16kg@140°C] of 40 to 10 000 determined according to the method of measurement reported in the description.

7. Blend according to any of Claims 1 to 6, **characterized in that** the amorphous poly-alpha-olefin is based on the monomers ethylene, propylene and 1-butene, wherein the proportion of the monomers propylene or 1-butene is more than 50% by weight and the proportion of the sum of the remaining monomers ethylene and 1-butene or ethylene and propene is in each case less than 50% by weight, in each case based on the sum of the molar proportions of ethylene, propylene and 1-butene.

8. Blend according to any of Claims 1 to 7, **characterized in that** the amorphous poly-alpha-olefin has isotacticities of the 1-butene or propene blocks of less than 80% of the mmmm-pentad determined according to the method of measurement reported in the description.

9. Process for producing blends according to any of Claims 1 to 8, **characterized in that** the constituents are commixed.

10. Process according to Claim 9, **characterized in that** the constituents are employed and mixed as powder or pellets.

11. Process according to Claim 10, **characterized in that** the pellet mixture is extruded to afford a mixed pellet material.

12. Process according to any of Claims 9 to 11, **characterized in that** it contains a step which comprises the production of packagings, films, injection moulded parts, pipes, hoses, fibres, textiles, bottles, plastic housings, masterbatch compounds for improved pigment dispersion, manufacturing plastics in the automotive or transport sectors.

13. Use of a blend according to any of Claims 1 to 8 as, or for the production of, packagings, films, injection moulded parts, pipes, hoses, fibres, textiles, bottles, plastic housings, masterbatch compounds for improved pigment dispersion, manufacturing plastics in the automotive or transport sectors.

## Revendications

1. Mélange contenant au moins deux polyoléfines différentes, **caractérisé en ce qu'**il contient en tant qu'autre constituant une polyalpha-oléfine amorphe, qui est à base des monomères éthène, propène et 1-butène, et dont la viscosité à 190 °C, mesurée par la méthode donnée dans la description, est de 200 mPa*s à 200 000 mPa*s, le mélange contenant, en tant qu'au moins deux polyoléfines différentes, un polyéthylène et un polypropylène, et le polyéthylène présentant un indice de fluidité [MFI 2,16 kg à 190 °C], déterminé par la méthode ISO 1133 donnée dans la description, inférieur à 10 g/10 min, de préférence de 0,01 à 2 g/10 min, et le polypropylène présentant un indice de fluidité [MFI 2,16 kg à 230 °C], déterminé par la méthode donnée dans la description, inférieur à 50 g/10 min, de préférence de 0,01 à 25 g/10 min.

2. Mélange selon la revendication 1, **caractérisé en ce qu'**au moins l'une des deux polyoléfines différentes est au moins partiellement, de préférence complètement, un recyclât.

3. Mélange selon la revendication 1 ou 2, **caractérisé en ce que** la proportion de la polyalpha-oléfine amorphe, rapportée à la masse totale du mélange, est de 1 à 25, de préférence de 2 à 15, d'une manière particulièrement préférée de 3 à 10 % en poids, et tout spécialement de 5 à 7,5 % en poids.

4. Mélange selon l'une des revendications 1 à 3, **caractérisé en ce que** la proportion, rapportée à la masse totale des au moins deux polyoléfines différentes, de la polyoléfine la moins abondante dans le mélange est de 1 à 45 % en poids, de préférence de 2 à 30 % en poids et d'une manière particulièrement préférée de 5 à 20 % en poids, et de la polyoléfine la plus abondante dans le mélange est de 55 à 99 % en poids, de préférence de 70 à 98 % en poids et d'une manière particulièrement préférée de 80 à 95 % en poids.

5. Mélange selon l'une des revendications 1 à 4, **caractérisé en ce que** la polyalpha-oléfine amorphe présente une polydispersité de 5 à 10 et/ou, de préférence une température de transition vitreuse de -45 °C à -25 °C, chacune déterminée par la méthode de mesure donnée dans la description.

6. Mélange selon l'une des revendications 1 à 5, **caractérisé en ce que** la polyalpha-oléfine amorphe présente un indice de fluidité [MFI 2,16 kg à 140 °C] de 40 à 10 000, déterminé par la méthode de mesure donnée dans la description.

7. Mélange selon l'une des revendications 1 à 6, **caractérisé en ce que** la polyalpha-oléfine amorphe est à base des monomères éthylène, propylène et 1-butène, la proportion des monomères propylène ou 1-butène étant supérieure à 50 % en poids et la proportion de la somme des autres monomères éthylène et 1-butène ou éthylène et propène est dans chaque cas inférieure à 50 % en poids, dans chaque cas par rapport à la somme des proportions en moles d'éthylène, de propylène et de 1-butène.

8. Mélange selon l'une des revendications 1 à 7, **caractérisé en ce que** la polyalpha-oléfine amorphe présente des isotacticités des blocs 1-butène ou propène inférieures à 80 % en poids des pentades mmmm, déterminées par la méthode de mesure donnée dans la description.

9. Procédé de fabrication de mélanges selon l'une des revendications 1 à 8, **caractérisé en ce qu'**on mélange les constituants.

10. Procédé selon la revendication 9, **caractérisé en ce que** les constituants sont utilisés et mélangés sous forme de poudre ou de granulés.

11. Procédé selon la revendication 10, **caractérisé en ce que** le mélange de granulés est extrudé pour donner un granulé mixte.

12. Procédé selon l'une des revendications 9 à 11, **caractérisé en ce qu'**il contient une étape qui comprend la fabrication d'emballages, de feuilles, de pièces moulées par injection, de tubes, de tuyaux flexibles, de fibres, de textiles, de bouteilles, de boîtiers en plastique, de composés mélanges-maîtres pour une dispersion améliorée des pigments, de plastiques pour la construction dans l'automobile ou dans le domaine des transports.

13. Utilisation d'un mélange selon l'une des revendications 1 à 8 en tant que ou pour la fabrication d'emballages, de feuilles, de pièces moulées par injection, de tubes, de tuyaux flexibles, de fibres, de textiles, de bouteilles, de boîtiers en plastique, de composés mélanges-maîtres pour une dispersion améliorée des pigments, de plastiques pour la construction dans l'automobile et dans le domaine des transports.
